## Europäisches Patentamt

## European Patent Office

## Office européen des brevets

(19)

(11) Publication number : **0 285 659 B1**

# EUROPEAN PATENT SPECIFICATION

(12)

(45) Date of publication of patent specification :
22.07.92 Bulletin 92/30

(51) Int. Cl.⁵ : **B65H 27/00, F16C 13/00**

(21) Application number : **87902149.1**

(22) Date of filing : **26.03.87**

(86) International application number :
**PCT/JP87/00183**

(87) International publication number :
**WO 88/01977 24.03.88 Gazette 88/07**

(54) **ROLL UNIT AND COMBINED ROLLS.**

(30) Priority : **09.09.86 JP 138406/86 U**
**09.09.86 JP 138407/86 U**

(43) Date of publication of application :
**12.10.88 Bulletin 88/41**

(45) Publication of the grant of the patent :
**22.07.92 Bulletin 92/30**

(84) Designated Contracting States :
**DE GB**

(56) References cited :
**JP-A-58 109 363**
**JP-A-59 078 064**
**JP-A-60 258 049**
**JP-U-55 132 046**
**JP-U-58 030 640**
**JP-U-61 041 118**
**JP-Y-11 007 229**
**JP-Y-36 002 743**
**JP-Y-40 001 184**
**JP-Y-61 008 034**
**No relevant documents have been disclosed.**

(73) Proprietor : **CALP KOGYO KABUSHIKI**
**KAISHA**
**1-277, Kanda-Izumicho Chiyoda-ku**
**Tokyo 101 (JP)**

(72) Inventor : **NAKAMURA, Hironori**
**Idemitsu-Tsuruse-shataku 401**
**19-25, Tsuruse-nishi 3-chome**
**Fujimi-shi Saitama 354 (JP)**
Inventor : **YOTSUI, Toshiaki Lions-mansion**
**1-203**
**2413-2, Shukugawara Tama-ku**
**Kawasaki-shi Kanagawa 214 (JP)**
Inventor : **SATO, Youichi**
**32-1, Aobadai 7-chome Ichihara-shi**
**Chiba 299-01 (JP)**
Inventor : **UMETSUBO, Toshiaki**
**Idemitsu-Tsuruse-shataku 304**
**19-25, Tsuruse-nishi 3-chome**
**Fujimi-shi Saitama 354 (JP)**
Inventor : **OHKAWA, Hideo**
**7-4, Izumicho Higashimatsuyama-shi**
**Saitama 355 (JP)**

(74) Representative : **Hoeger, Stellrecht & Partner**
**Uhlandstrasse 14 c**
**W-7000 Stuttgart 1 (DE)**

EP 0 285 659 B1

## Description

This invention relates to a composite roller assembly including a shaft having a locking end portion, and a plurality of rollers including an end roller mounted on said shaft, each of said rollers comprising an outer contact portion of a first diameter and at each of its opposite ends engaging means engageable with the respective engaging means of adjacent rollers.

A roller assembly of this general type is known from JP-Y1-11-7229 disclosing a composite roller assembly wherein the shaft is provided with key elements projecting into nodges of the respective rollers having internesting projections and recesses, respectively, provided on the end faces thereof. The rollers of the known assembly are held together by means of securing elements screwed onto externally threaded shaft ends.

Generally, composite roller assemblies of the present type are employable in various machines for manufacturing, processing or using a sheet or film material such as a synthetic resin sheet or film, paper, etc. or various feed rolls or wind-up rolls usable in business machines, or print rolls.

Conventionally, various machines, for example, for handling a film or a sheet material of a synthetic resin, or paper or fabric, use rolls for winding up or feeding the material or the product.

In general, such rolls include a roll of a continuous length formed integrally and a combination roll which is formed of a plurality of roll portions in sections or short lengths, which are to be combined to form a roll assembly. These two kinds of rolls are chosen according to the uses or necessity. However, a roll of a continuous length has various disadvantages in that it can not cope with a change in width of the product, it is difficult to be manufactured and heavy in weight, it has a large contact area, which produces a large frictional resistance and accordingly causes, for example, wrinkle or static electricity on the product. Therefore, for the use in which these disadvantages do matter, a composite roller assembly formed of a plurality of rollers of short axial lengths which is free from these problems is chosen.

On the other hand, the rollers of a short length constituting the conventional composite roller assembly comprises a contact portion and a shaft inserting portion which are made of a synthetic resin or rubber and an insert member of a metallic material which is fitted in the shaft inserting portion. These rollers must be mounted on and fixed to the shaft by setting screws inserted into threaded holes formed in the metallic insert member for each of the rollers.

Thus, in the conventional composite roller assembly, a plurality of rollers must be fixed individually to the shaft by setting the screws into the screw holes formed in the metallic insert member of the shaft inserting portion for each of the rollers, respectively.

Therefore, it is very troublesome or bothersome to mount the rollers onto or dismounting the rollers from the shaft. By this reason, it can not, after all, be easy to adjust the entire width of the roller assembly, even though the number of the rollers is variable.

Furthermore, as each of the rollers constituting the composite roller assembly is made of a synthetic material and a metallic material, the shaping of the rollers and the insertion of the metallic insert member should be carried out at separate steps. This necessitates extra steps and costs for the manufacturing of the rollers.

It is the object of the present invention to obviate the above-mentioned problems, and to provide a composite roller assembly, wherein the step of fixing the plurality of rollers to the shaft is simplified, wherein the adjustment of the entire width of the composite roller assembly is facilitated and wherein the individual rollers can be easily formed from one single component, for example, a synthetic resin, reducing the weight of the rollers.

This object, according to the present invention, is accomplished by means of a composite roller assembly of the type indicated at the outset and being characterized in that each of said rollers has a hub portion of a second diameter smaller than said first diameter for receiving said shaft and being concentric with said contact portion, that said engaging means are provided at opposite ends of said hub portions and in that only said end roller has locking means for locking itself to said locking end portion of said shaft, so that once said end roller is locked to said shaft all of the remaining rollers are indirectly locked to said shaft by means of said engaging means and all of said rollers are rotatable conjointly with said shaft.

Thus, in accordance with the present invention, there is provided a roller for a composite roller assembly, including a hub or shaft inserting portion having a hole formed at a central portion thereof, for passing a shaft therethrough and a roller portion formed integrally with said shaft inserting portion and having at an outer circumferential periphery thereof, a roll contact portion or operative portion, which roller comprises engaging means provided at opposite ends of the shaft inserting portion, for respectively engaging with corresponding ends of a shaft inserting portion of an adjacent roller.

Further, according to the present invention, there is provided a composite roller assembly including a shaft and a plurality of rollers mounted on the shaft, in which said rollers each comprise a roll portion formed with a contact portion and a hub or shaft inserting portion concentric with said roll portion, said shaft inserting portion having, at its opposite ends, engaging means engageable with corresponding shaft inserting portion of each of adjacent rollers, and which composite roller assembly further comprises a locking means for locking said shaft inserting portion to the shaft inserted through said shaft inserting portion so as to rotate the shaft inserting portion conjointly with the shaft.

Some embodiments of the present invention will now be described, referring to the drawings.

Fig.1 is a perspective view of elements for constituting a composite roller assembly according to a first embodiment of the present invention;

Fig.2 is perspective view of the complete composite roller assembly of Fig.1 in its assembled state;

Fig.3 is a partly centrally sectioned side view of the roller assembly of Fig.2;

Fig.4 and 5 are perspective views each showing a modified form of a shaft;

Figs.6 and 7 are perspective views each showing a modified form of a roller;

Fig.8 is a perspective view of a modified embodiment of the invention which uses screws for fixing;

Fig.9 is a perspective view of a roller employable in a second embodiment of the present invention;

Fig.10 is a sectional view of the roller shown in Fig.9;

Fig.11 is sectional view of two rollers according to Figs.9 and 10 in a assembled state; and

Fig.12 is a perspective view of a roller employable in a third embodiment of the present invention.

First Embodiment

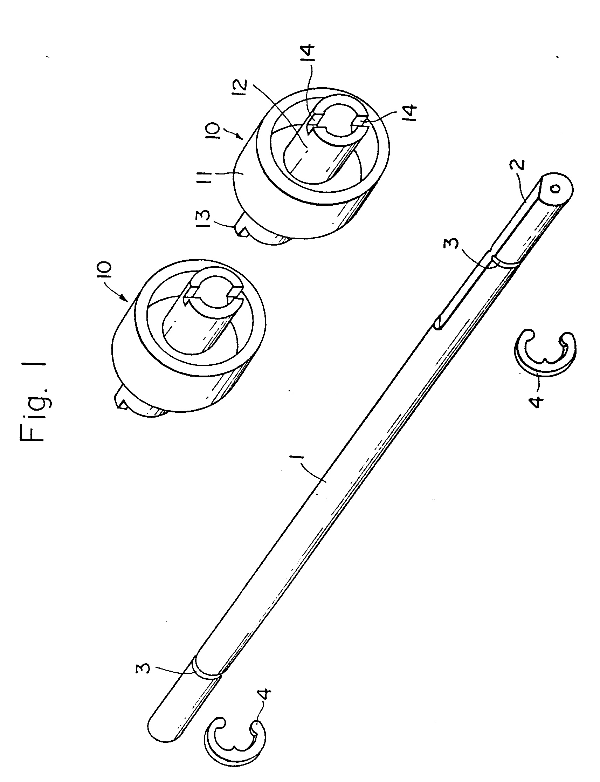

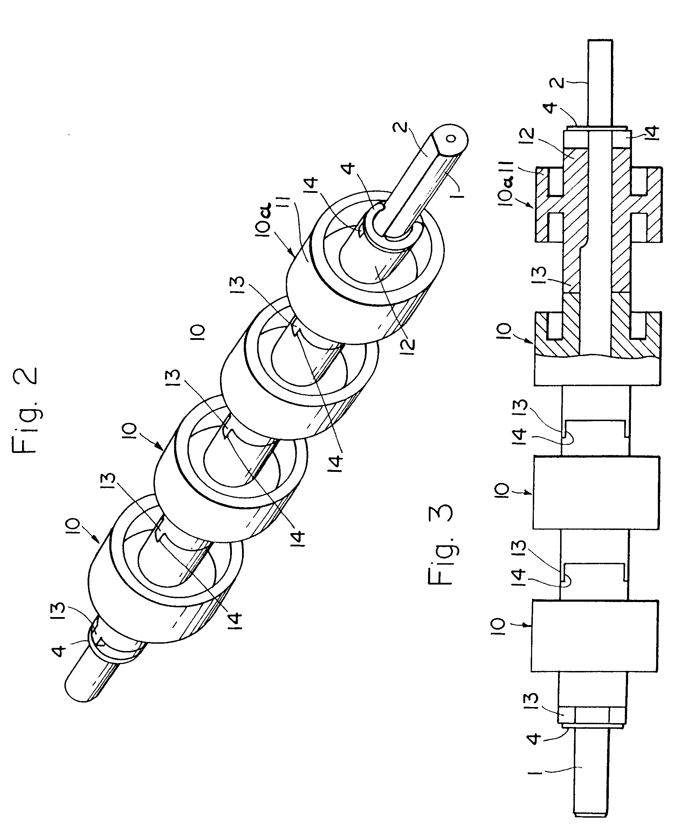

Fig.1 is a perspective view of elements constituting a composite roller assembly according to a first embodiment of the present invention, Fig.2 is a perspective view of the composite roller assembly in full scade, showing it in the assembled state, and Fig.3 shows a partly centrally sectioned view of the assembly of Fig.2.

In these figures, 1 designates a shaft having a circular configuration in section and formed, in continuous length, from aluminum, stainless steel, iron, ceramics or synthetic resins. The shaft 1 has an end portion 2 whose outer periphery is partly cut so as to form a D-shape in section. The shaft 1 further has grooves 3, 3 at opposite end portions thereof for receiving E-rings therein, respectively. The spacing between these grooves 3, 3 is a length determined by the length of the number of rollers 10 combined as will be described in detail later and it has a length corresponding to the total length of four rollers 10 in the embodiment as illustrated.

The roller 10 has, at a central portion thereof, a cylindrical contact portion or an operative portion 11 which is operative, for example, for feeding or winding up the product, and a hub or shaft inserting portion 12 having a cylindrical through-hole concentric with the contact portion 11, at opposite ends in the axial direction of the roller, around the center thereof. One end of the shaft inserting portion 12 has, on the peripheral end edge thereof, two engaging projection 13 at angular intervals of 180°, while the other end of the shaft inserting portion 12 has two engaging recesses 14 engageable with the engaging projections 13, respectively, at angular intervals of 180°.

A plurality of rollers 10 are thus prepared and they are mounted around the shaft with the engaging projections 13 engaged with the corresponding engaging recesses 14, respectively, and with the assembly of the rollers pressed by the E-rings 4, 4 inwardly, to form a composite roller assembly having a desired width.

In this connection, it is to be noted that the through-hole of the shaft inserting portion 12 of the roller 10a, which is located at the end of the shaft 1 where the D-cut portion 2 is formed, has a sectional configuration of D-shape complementary with the D-shape of the D-cut portion 2. Thus, the rollers 10 mounted on the roll shaft 1 are locked with respect to the shaft 1 through the roller 10a located at the shaft end. Such a D-cut portion 2 is effective to easily and surely fix the rollers 10 to the shaft 1 and to surely transmit the driving force between the shaft 1 and the rollers 10.

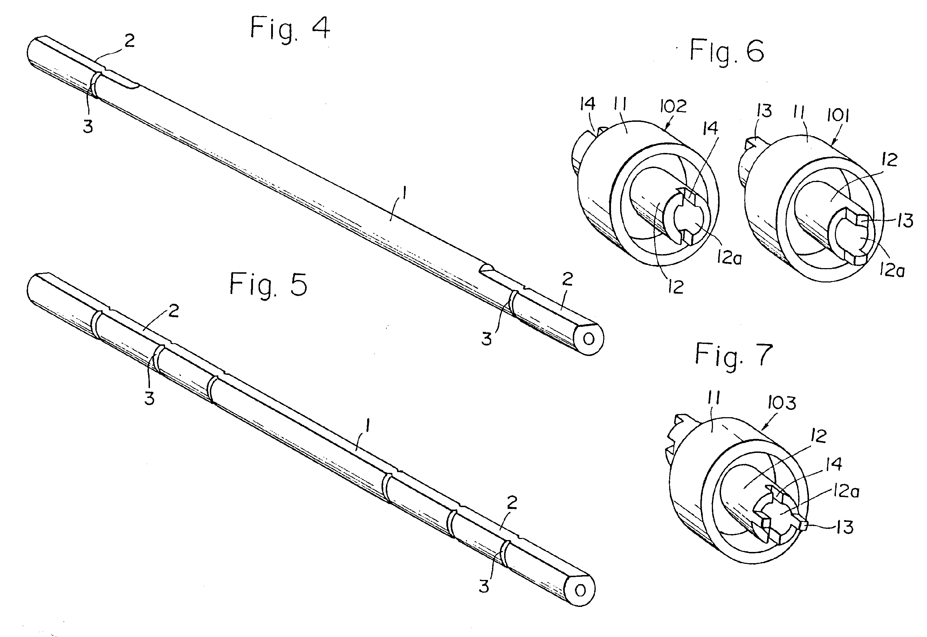

The D-cut portion 2 formed on the shaft 1 is formed at one end portion of the shaft 1 in the above-mentioned embodiment, but it may be formed at either end portion of the shaft 1 as illustrated in Fig.4. In this case, the length of the D-cut portion 2 in the longitudinal direction thereof may be selected as desired. Alternatively, the D-cut portion may be formed all along the length of the shaft 1 as illustrated in Fig.5. In especial, when the D-cut portion 2 is formed along the entire length of the shaft 1, all the roll units may be units 101, 102 having the same through-hole 12a having a D-shaped configuration in section and they may be placed at any given position in an assembly when they are assembled. This enables the number of the kinds of the parts to be reduced and simplified and the adjusting operation to be facilitated.

The composite roller assembly of the present embodiment is not limited to that as given above and it may, of course, incluse the following modifications.

(1) One type 101 of the rollers constituting the composite roller assembly may have, at opposite ends thereof, projections 13 and the other type 102 may have, at opposite ends thereof, recesses 14 (see Fig.6).

(2) Another type 103 of the rollers may have, at the same end thereof, both the projection 13 and recesses 14 formed, on the peripheral end surfaces, at equal angular intervals (see Fig.7).

(3) Three, four, five or more engaging portion may be provided at equal intervals on each of the opposite peripheral end surfaces.

(4) A single engaging portion may be provided on each of the opposite end peripheral surfaces.

(5) Engaging portions may be provided all over the entire surface of each opposite end of the roller.

(6) The engaging portion on each of the opposite end surfaces of the roller may be in the form other than the projection and recess, for example, in the form of serration.

(7) An anti-slip means may be provided on the contact portion 11 of the roller. The anti-slip means 11 may be formed by exposing inorganic fillers contained in a resin or by knurling.

(8) A plurality of grooves 3, 3 for E-rings may be formed on the opposite end portions of the shaft 1 at proper spaces. In this case, the number of the rollers to be combined may be freely selected and the setting position of the entire assembly of the rollers may be adjusted by using a single shaft.

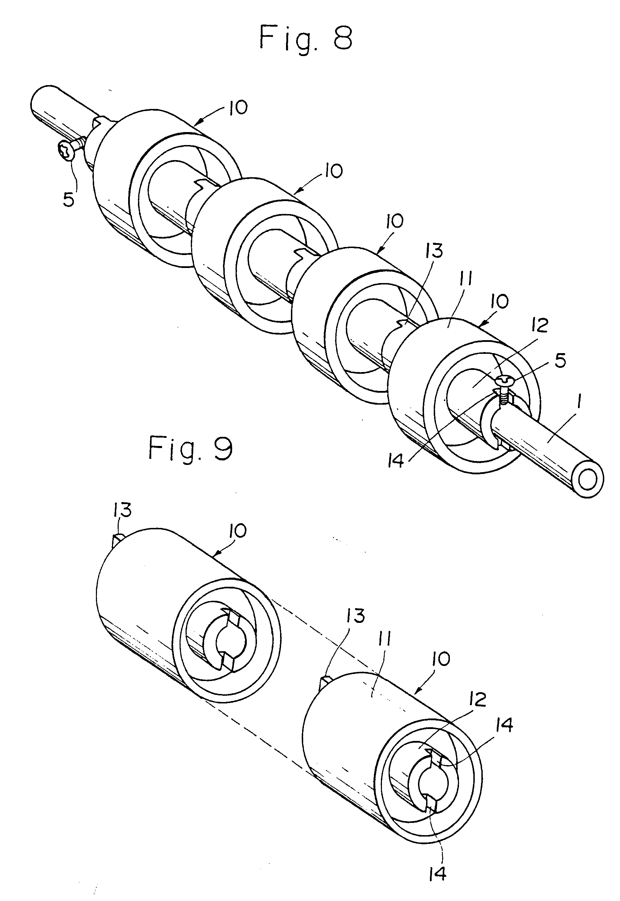

(9) The ends of the assembly of the rollers mounted on the shaft 1 may be fixed by screws. In this case, if one of the screws 5 is set in the shaft 1 withing the recess 14, the D-cut portion 2 on the shaft 1 may be omitted (see Fig.8).

(10) The locking portion may be formed in a configuration other than the D-cut, for example, in the form of oblong (Kobang-shape) with the opposite faces on the periphery cut out.

(11) The opposite ends of the assembly of the rollers may be fixed by members other than the E-rings, for example, by screws.

Second Embodiment

In the foregoing embodiment, each of the rollers 10 has a contact portion or operative portion 11 at a central portion thereof and a cylindrical hub or shaft inserting portion 12 concentric with the contact portion 11 which is projected outwardly in the axial direction from the opposite ends of the axial direction of the roller, around the central axis thereof. With this arrangement, it will be seen that when the rollers 10 are mounted onto the shaft 1 and then assembled (Fig.2 and Fig.3), the roller assembly surface formed by the contact portions 11 is intermittent.

In contrast, for the uses which need a continuous, flush roll operative surface, such as a print roll, a composite roller assembly of the present invention may be formed, for example, as illustrated in Fig.9 to 11.

The essential configuration of the present embodiment may be substantially the same as that of the first embodiment. This embodiment, however, is different from the first embodiment, in that lengths in the axial direction of the shaft inserting portion 12 and the contact portion 11 are selected so that the contact portions 11 of the respective roll units 10 form a continuous, flush surface when the engaging portions 13 and 14 of the shaft inserting portions are engaged with each other.

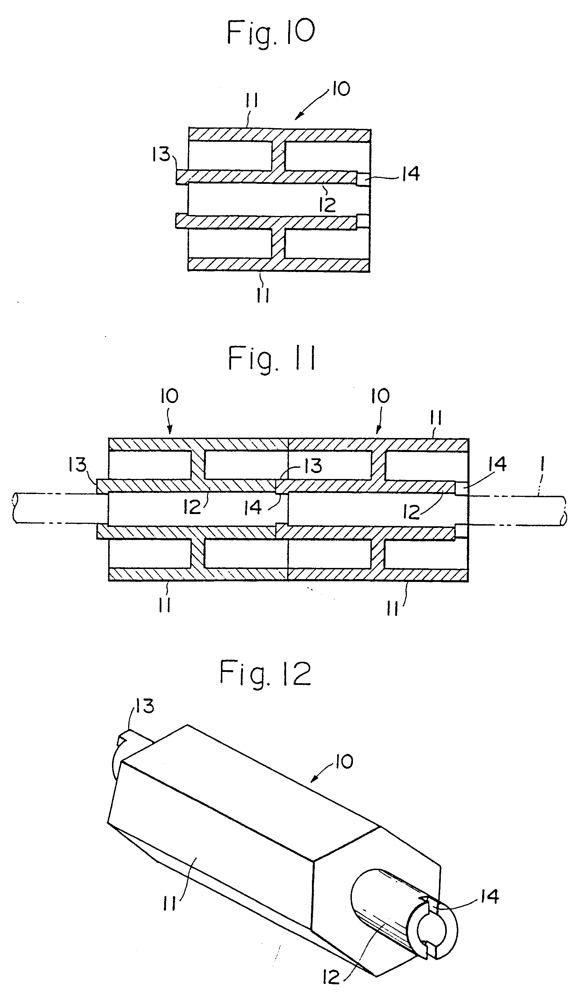

For this purpose, the engaging portions 13 and 14 may be formed by a recess which is concaved inwardly in the axial direction from a reference, axial end face of the contact portion 11 and by a projection connexed outwardly in the axial direction from such a reference face as shown in section in Fig.10. Of course, the reference face should not always be the end face of the contact portion 11 so long as there is a relation in lengths in the axial direction that the engaging portions 13, 14 of the shaft inserting portions 12 may be engageable with each other, while establishing the state in which the corresponding end faces of the contact portions are butt-combined with each other.

Since the continuous, flush roller assembly operative surface is formed of a plurality of separate rollers 10 assembled in the present embodiment, the width of the roll operative surface may be freely selected according to necessity by changing the number of the rollers 10 to be combined. Furthermore, only a portion of the operative surface, which is subjected to considerable abrasion, may be replaced so that the surface conditions of the entire width of the roller assembly can be kept in the desired condition without replacing the complete roller assembly. Moreover, the material of the roller may be selected according to the position where each roller is situated so that the wearing of the roller assembly may be uniform as a whole.

Third Embodiment

Although the contact portion 11 of the roller 10 is formed with a circular cross section in the foregoing embodiments, the configuration of the contact portion 11 is no limited to this design, but it may, for example, be polygonal in section as illustrated in Fig.12.

The polygon selected as an outer peripheral configuration of the contact portion of the roller may, for example, be a triangle, a square, a hexagon, an octagon, decagon, etc.

The outer peripheral configuration of the contact portion 11 may further alternatively be of a cocoon, an oval, or a star. The outer peripheral configuration of the contact portion 11 may further be bilaterally asymmetrical in section, for example, the configuration may be such that a lateral half is semicircular and the other half is polygonal. When the rollers having such configurations are used for a feed roll, intermittent feeding can be attained and possible slip in the feeding can be prevented.

Moreover, the contact portion 11 of the roller 10 may have an outer periphery swollen or bulging at a portion central in the axial direction of the roll unit, if it is preferred according to the use.

In the present embodiment, various anti-slip processing, such as knurling, sand-blasting, may be applied to the surface of the contact portion 11. Alternatively, the surface of the contact portion 11 may be covered with a rubber sheet or felt.

In each of the foregoing embodiments, the material of the rollers 10 may be selected suitably from metal, wood, synthetic resin, according to the use.

As preferred examples of the materials of the rollers 10, there can be mentioned, for example, composites comprising a synthetic resin or resins and an inorganic filler or fillers and/or a metallic filler or fillers. The compounding ratio of the synthetic resin or resins to the inorganic filler or fillers and/or metallic filler or fillers is, in general, 97 to 30wt% : 3 to 70wt%.

## Claims

1. A composite roller assembly including:
a shaft (1) having a locking end portion (2); and
a plurality of rollers (10, 10a) including an end roller (10a) mounted on said shaft (1), each of said rollers (10, 10a) comprising an outer contact portion (11) of a first diameter and at each of its opposite ends engaging means (13, 14) engageable with the respective engaging means (13, 14) of adjacent rollers (10, 10a),
**characterized in that** each of said rollers (10,10a) has a hub portion (12) of a second diameter smaller than said first diameter for receiving said shaft (1) and being concentric with said contact portion (11), that said engaging means (13, 14) are provided at opposite ends of said hub portions (12) and in that only said end roller (10a) has locking means for locking itself to said locking end portion (2) of said shaft (1), so that once said end roller is locked to said shaft all of the remaining rollers are indirectly locked to said shaft by means of said engaging means and all of said rollers are rotatable conjointly with said shaft.

2. A roller assembly according to claim 1, wherein said contact portion (11) has an anti-slip means thereon which is formed by a composite material containing a resin and an inorganic filler.

3. A roller assembly according to claim 1, wherein said contact portion (11) has a circular outer periphery.

4. A roller assembly according to claim 1, wherein said contact portion (11) has a polygonal outer periphery.

5. A roller assembly according to claim 1, wherein said contact portion (11) has an oval outer periphery.

## Patentansprüche

1. Zusammengesetzte Rollenanordnung umfassend:
eine Welle (1) mit einem verriegelnden Endbereich (2); und
mehrere Rollen (10, 10a), welche eine Endrolle (10a) umfassen, die auf der Welle (1) montiert ist, wobei jede dieser Rollen (10, 10a) einen äußeren Kontaktbereich (11) mit einem ersten Durchmesser sowie an jedem ihrer einander gegenüberliegenden Enden Eingriffseinrichturgen (13, 14) umfaßt, die mit den betreffenden Eingriffseinrichtungen (13, 14) benachbarter Rollen (10, 10a) in Eingriff bringbar sind,
**dadurch gekennzeichnet,** daß jede der Rollen (10, 10a) einen Nabenteil (12) mit einem zweiten Durchmesser aufweist, der kleiner ist als der erste Durchmesser, um die Welle (1) aufzunehmen und der konzentrisch zu dem Kontaktbereich (11) ist, daß die Eingriffseinrichtungen (13, 14) an den einander gegenüberliegenden Enden des Nabenteils (12) vorgesehen sind und daß nur die Endrolle (10a) Verriegellungseinrichtungen aufweist, um sich selbst bezüglich des verriegelnden Endbereichs (2) der Welle (1) zu verriegeln, so daß dann, wenn die Endrolle erst einmal mit der Welle verriegelt ist, alle übrigen Rollen mit Hilfe der Eingriffseinrichtungen indirekt mit der Welle verriegelt werden und alle genannten Rollen gemeinsam mit der Welle drehbar sind.

2. Rollenanordnung nach Anspruch 1, bei der auf dem Kontaktbereich (11) Anti-Schlupfmittel vorgesehen sind, die durch ein zusammengesetztes Material gebildet werden, welches ein Harz und einen anorganischen Füller enthält.

3. Rollenanordnung nach Anspruch 1, bei der der Kontaktbereich (11) einen kreisrunden äußeren Umfang aufweist.

4. Rollenanordnung nach Anspruch 1, bei der der Kontaktbereich (11) einen polygonförmigen äußeren Umfang aufweist

5. Rollenanordnung nach Anspruch 1, bei der der Kontaktbereich (11) einen ovalen äußeren Umfang aufweist.

## Revendications

1. Ensemble composite à rouleaux, comprenant :
un arbre (1) ayant une partie (2) d'extrémité de blocage, et
plusieurs rouleaux (10, 10a) comprenant un rouleau d'extrémité (10a) monté sur l'arbre (1), chacun des rouleaux (10, 10a) comportant une partie externe de contact (11) ayant un premier diamètre et, à chacune de ses extrémités opposées, un dispositif de coopération (13, 14) destiné à coopérer avec le dispositif respectif de coopération (13, 14) de rouleaux adjacents (10, 10a),
**caractérisé en ce que** chacun des rouleaux (10, 10a) a une partie de moyeu (12) de second diamètre inférieur au premier diamètre, destinée à loger l'arbre (1) et concentrique à la partie de contact (11), en ce que le dispositif de coopération (13, 14) est disposé aux extrémités opposées des parties de moyeu (12), et en ce que seul le rouleau d'extrémité (10a) a un dispositif de blocage de ce rouleau sur la partie d'extrémité de blocage (2) de l'arbre (1), si bien que, lorsque le rouleau d'extrémité est bloqué sur l'arbre, tous les rouleaux restants sont bloqués indirectement sur l'arbre par les dispositifs de coopération et tous les rouleaux peuvent tourner ensemble avec l'arbre.

2. Ensemble à rouleaux selon la revendication 1, dans lequel la partie de contact (11) a un dispositif anti-glissement qui est formé d'un matériau composite contenant une résine et une charge minérale.

3. Ensemble à rouleaux selon la revendication 1, dans lequel la partie de contact (11) a une périphérie externe circulaire.

4. Ensemble à rouleaux selon la revendication 1, dans lequel la partie de contact (11) a une périphérie externe polygonale.

5. Ensemble à rouleaux selon la revendication 1, dans lequel la partie de contact (11) a une périphérie externe ovale.

# Fig. 1

Fig. 2

Fig. 3

Fig. 4

Fig. 6

Fig. 5

Fig. 7

EP 0 285 659 B1

# Fig. 8

# Fig. 9

Fig. 10

Fig. 11

Fig. 12

11